# EUROPÄISCHE PATENTANMELDUNG

(11) **EP 2 159 385 A1**
(43) Veröffentlichungstag der Anmeldung: **03.03.2010**
(21) Anmeldenummer: 07012384.9
(22) Anmeldetag: 25.06.2007
(51) Int. Cl.: F01K 3/00, F01K 7/34, F22B 35/00, F22D 1/32, F22G 5/12, F23G 5/46

(54) **Verfahren und Vorrichtung zum Betreiben eines Dampferzeugers**

(71) Anmelder: SIEMENS AKTIENGESELLSCHAFT, 80333 München (DE)
(72) Erfinder: Haje, Detlef, Dr., 02828 Görlitz (DE)

(57) **Zusammenfassung**

Die Erfindung bezieht sich auf ein Verfahren und eine Vorrichtung zum Betreiben eines Dampferzeugers mit einem Wasser-Dampf-Kreislauf bestehend aus mit Anzapfdampf beheizten Vorwärmern (11, 14) einem mit Rauchgas beheizten Vorwärmer (3), einem Verdampfer (4) und einem Überhitzer (5). Gemäß dem Verfahren wird bei einem von der Grundauslegung des Dampferzeugers abweichendem Wärmeeintrag aus dem Rauchgas in den Verdampfer (4) hinter oder vor den Verdampfer (4) Dampf entnommen und nach einer thermodynamischen Behandlung in den Wasser-Dampf-Kreislauf zurückgeführt. Bei der Vorrichtung ist in Strömungsrichtung des Wasser-Dampf-Kreislaufes hinter dem Verdampfer (4) eine Dampfleitung (17) abgezweigt, in der ein Dampfumformventil (21) angeordnet ist. Weiterhin sind stromabwärts des Dampfumformventils (21) von der Dampfleitung (17) Dampfzweigleitungen (18) abgezweigt und zu den mit Anzapfdampf beheizten Wärmetauschern des Wasser-Dampf-Kreislaufs geführt.

## Beschreibung

Die Erfindung betrifft ein Verfahren zum Betreiben eines Dampferzeugers mit den Merkmalen des Oberbegriffes des Anspruches 1 sowie eine Vorrichtung zur Durchführung des Verfahrens.

Derartige mit fossilen Brennstoffen, aber besonders mit Biomasse oder Müll befeuerte Dampferzeuger unterliegen mit fortschreitender Betriebsdauer einer zunehmenden Verschmutzung der Heizflächen. Die sich auf den Heizflächen ablagernden Verschmutzungen verändern den Wärmeübergang an den Verdampfer- und Überhitzerheizflächen. Damit entstehen Betriebseinschränkungen oder ungünstige Betriebszustände für nachfolgende Komponenten.

Die Auslegung der Heizflächen erfolgt auf Basis eines Mindest-Verschmutzungsgrades oder einer "Grundverschmutzung", bei dem/der sich ein ausgewogenes Verhältnis der Wärmeströme für Verdampfung und für Überhitzung einstellt. Vor einem Erreichen der Grundverschmutzung erfolgt ein zu hoher Wärmeeintrag in die Verdampferheizflächen, so dass eine größere Menge an Wasser verdampft. Wegen des höheren Dampfmassenstromes kann dieser in den Überhitzerheizflächen nicht auf die erforderlichen Temperaturen überhitzt werden, so dass der Betrieb nachfolgender Komponenten, wie die Dampfturbine, eingeschränkt wird. Mit zunehmender Verschmutzung sinkt der Wärmeeintrag in die Verdampferheizflächen und damit der Dampfmassenstrom im Überhitzerteil, so dass sich eine stärkere Überhitzung einstellt, was ebenfalls zu Beeinträchtigungen in der Dampfturbine führt.

Der Erfindung liegt die Aufgabe zugrunde, einen Ausgleich von zeitabhängigen Verschmutzungsvorgängen an dem gattungsgemäßen Dampferzeuger vorzunehmen und unter Beachtung einer möglichst positiven Wirkung auf die Leistung und den Wirkungsgrad die Wärmeführung und Dampferzeugung über die Betriebsdauer des Dampferzeugers weiter zu verbessern.

Die Aufgabe wird bei einem gattungsgemäßen Verfahren erfindungsgemäß durch die kennzeichnenden Merkmale des Anspruches 1 gelöst. Vorteilhafte Ausgestaltungen der Erfindung sind Gegenstand der Unteransprüche. Eine Vorrichtung zur Durchführung des Verfahrens ist in den Ansprüchen 10 und 11 angegeben.

Durch die Erfindung wird ein gezielter Ausgleich überschüssiger Wärmeströme im Dampferzeuger vorgenommen. Ein solcher Ausgleich gestattet hinsichtlich des Wirkungsgrades und der Leistung der Wärmekraftanlage eine bestmögliche Einbindung vorhandener Wärmeströme. Ein solcher Ausgleich erfolgt durch eine gezielte Abführung überschüssiger Wärmeströme aus den einzelnen Heizflächen des Dampferzeugers und deren Einspeisung an geeigneten Stellen des Wasser-Dampf-Kreislaufes. Somit kann vor Erreichen der Grundverschmutzung eine Überschussmenge aus dem Verdampferteil abgeführt und eine Überhitzung weiterhin sichergestellt werden. Ferner kann nach Erreichen der Grundverschmutzung bei einer Verschiebung der Wärmeströme zu den Überhitzerheizflächen eine gezielte Temperaturführung durch Abspritzen des Dampfes mit vorgewärmtem Speisewasser erreicht werden.

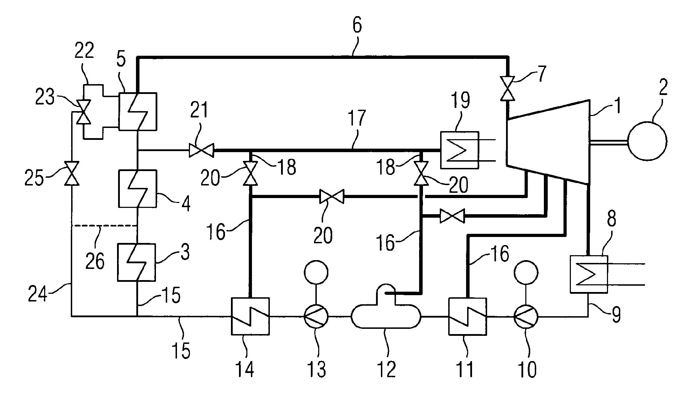

Ein Ausführungsbeispiel der Erfindung ist in der Zeichnung dargestellt und wird im Folgenden näher erläutert. Die einzige Zeichnung zeigt:
Ein Schaltbild einer Dampfkraftanlage.

Die dargestellte Dampfkraftanlage besteht aus einem Dampferzeuger und einem Turbinenteil mit einer Dampfturbine 1 und einem von der Dampfturbine 1 angetriebenen Generator 2.

Der Dampferzeuger umfasst Heizflächen 3, 4, 5, die durch in einer nicht gezeigten Feuerung erzeugte Rauchgase beheizt werden. In der nicht gezeigten Feuerung werden feste Brennstoffe, vorzugsweise Biomasse oder Müll verbrannt.

Die von Rauchgas beheizten Heizflächen sind ein Economiser oder Speisewasser-Vorwärmer 3, ein Verdampfer 4 und ein Überhitzer 5. In den Heizflächen wird das Speisewasser vorgewärmt und verdampft. Der in dem Überhitzer 5 überhitzte Dampf wird über eine Frischdampfleitung 6 auf die Dampfturbine 1 gegeben. Dabei wird die Frischdampfleitung 6 durch ein Frischdampfventil 7 geregelt.

Der nach Abgabe seiner Arbeitsleistung aus der Dampfturbine 1 als Abdampf austretende Dampf wird in einem Kondensator 8 kondensiert. Das Kondensat wird durch eine Kondensatleitung 9 mit Hilfe einer Kondensatpumpe 10 durch einen Niederdruck-Vorwärmer 11 und einen Speisewasser-Behälter/Entgaser 12 gefördert. Eine Speisewasserpumpe 13 erhöht den Druck des Kondensates, drückt es durch einen Hochdruck-Vorwärmer 14 und führt es als Speisewasser durch eine Speisewasserleitung 15 dem durch Rauchgas beheizten Vorwärmer 3 zu.

Der Niederdruck-Vorwärmer 11 und der Hochdruck-Vorwärmer 14 werden durch Anzapfdampf beheizt, der an verschiedenen Anzapfstellen der Dampfturbine 1 entnommen und über Anzapfdampfleitungen 16 den Vorwärmern 11, 14 zugeführt wird.

In dem insbesondere durch Verbrennung von Biomasse oder Müll erzeugten Rauchgas sind Feststoffe enthalten, die sich bei einer bestimmten Oberflächentemperatur auf den Heizflächen des Dampferzeugers, vor allem des Verdampfers 4 niederschlagen und den Wärmeübergang beeinträchtigen. Die Grundauslegung des Dampferzeugers ist im Voraus auf einen bestimmten Verschmutzungsgrad der durch Rauchgas beheizten Heizflächen des Verdampfers 4 und des Überhitzers 5 ausgelegt. Bevor oder nachdem der Grundverschmutzungsgrad während einer Betriebsreise erreicht ist, stimmt der in der Grundauslegung des Verdampfers 4 und des Überhitzers 5 vorgesehene Wärmeeintrag in diese Heizflächen daher mit den realen Verhältnissen nur bedingt überein.

Für einen Ausgleich der zeitabhängigen Verschmutzungsverhältnisse sind die nachfolgend beschriebenen Maßnahmen bestimmt.

Zu Beginn der Betriebsreise des Dampferzeugers ist der in dem Verdampfer 4 durch Verdampfung entstandene Massenstrom zu groß, weil die Heizflächen zunächst weniger stark verschmutzt sind als in der Grundauslegung der Verdampferheizflächen vorausgesetzt ist. Wie in der Zeichnung zu erkennen ist, ist hinter dem Verdampfer 4 eine Dampfleitung 17 abgezweigt, über die der überschüssige Massenstrom an Dampf abgeführt wird. Von der Dampfleitung 17 sind Dampfzweigleitungen 18 abgezweigt, die mit den Anzapfdampfleitungen 16 verbunden sind, die jeweils zu dem Hochdruck-Vorwärmer 14 und zu dem Speisewasserbehälter/Entgaser 12 geführt sind. Der hinter dem Verdampfer 4 abgeführte, überschüssige Dampf wird über die Dampfzweigleitungen 18 in die genannten Aggregate eingeleitet und dient damit zu Heizzwecken in dem Wasser-Dampf-Kreislauf des Dampferzeugers. Der abgeführte Dampf kann auch einem externen Verbraucher 19, z. B. einem Fernheizsystem, zugeführt werden. Absperr- oder Stellventile 20 sind zwischen den Dampfzweigleitungen 18 und den Anzapfdampfleitungen 16 angeordnet. Der abgeführte überschüssige Dampf ersetzt damit ganz oder teilweise den Anzapfdampf. Der zu Heizzwecken nicht mehr benötigte Anzapfdampf kann damit in der Dampfturbine 1 verbleiben, an der Expansion teilhaben und mechanische Leistung erbringen.

In der Dampfleitung 17 ist vor den Dampfzweigleitungen 18 ein Dampfumformventil 21 angeordnet. In dem Dampfumformventil 21 wird der abgeführte Dampf entspannt und auf das dem Heizzweck angepasste Druckniveau gedrosselt. Die Drosselung bewirkt, dass die nachfolgenden Rohrleitungen, wie die Dampfleitung 17 stromabwärts von dem Dampfumformventil 21 und die Dampfzweigleitungen 18, für einen geringeren Druck als Frischdampfdruck ausgelegt werden können. Weiterhin wird eine Einspeisung in bestehende Systeme mit geringeren Druckstufen ermöglicht.

Im Verlauf der Betriebsreise übersteigt der Verschmutzungsgrad den angenommenen Verschmutzungsgrad gemäß Auslegung. In dem Fall ist durch den verringerten Wärmeeintrag der in dem Verdampfer 4 erzeugte Massenstrom zu klein und der in den Überhitzer 5 gelangende Dampf würde dort zu stark überhitzt. Zur Abhilfe ist an den Überhitzer 5 eine Umgehungsleitung 22 angeschlossen. In der Umgehungsleitung 22 ist ein Dampfumformventil 23 mit einer Wassereinspritzung angeordnet.

Vor dem Eintritt in den Vorwärmer 3 ist von der Speisewasserleitung 15 eine Speisewasserzweigleitung 24 abgezweigt. Die Speisewasserzweigleitung 24 ist mit der Wassereinspritzung des Dampfumformventils 23 verbunden. Über die Speisewasserzweigleitung 24 wird Speisewasser vor dem Verdampfer 4 entnommen und auf einem Temperaturniveau hinter dem Verdampfer 4 eingespritzt. Die Regelung der Spritzwassermenge erfolgt durch ein in der Speisewasserzweigleitung 24 angeordnetes Stellventil 25. Durch die Einspritzung in den überhitzten Dampfmassenstrom wird das Wasser verdampft und die Temperatur des Dampfes abgesenkt. Dadurch kann eine übermäßige Überhitzung des Dampfes vermieden und Temperaturgrenzen der Verdampferheizflächen eingehalten werden bei gleichzeitiger Erhöhung der Verdampfungsmenge. Durch die vorteilhafte Verwendung von vorgewärmtem Speisewasser besteht zwischen Dampf und Einspritzwasser nur eine begrenzte Temperaturdifferenz, was sich positiv auf die thermische Beanspruchung der Komponenten und ihre Haltbarkeit auswirkt.

Eine weitere vorteilhafte Ausgestaltung der Schaltung des Dampferzeugers ist durch Entnahme von Wasser nach dem Economizer oder Vorwärmer 3 über eine Zweigleitung 26 zu erreichen, die mit der Speisewasserzweigleitung 24 verbunden ist. Dadurch wird eine weiter reduzierte Temperaturdifferenz zwischen Dampf und Einspritzwasser erzielt. Darüber hinaus werden die Vorwärmer-Heizflächen noch besser genutzt, weil der zusätzliche Massenstrom eine höhere Temperaturdifferenz zwischen Heizflächen und Rauchgas und damit einen höheren Wärmestrom bewirkt.

## Patentansprüche

1. Verfahren zum Betreiben eines Dampferzeugers mit einem Wasser-Dampf-Kreislauf aus mit Anzapfdampf beheizten Vorwärmern (11, 14) aus einem mit Rauchgas beheizten Vorwärmer (3), aus einem Verdampfer (4) und aus einem Überhitzer (5),
**dadurch gekennzeichnet,**
**dass** bei einem von der Grundauslegung des Dampferzeugers abweichendem Wärmeeintrag aus dem Rauchgas in den Verdampfer (4) hinter oder vor den Verdampfer (4) Dampf entnommen und nach einer thermodynamischen Behandlung in den Wasser-Dampf-Kreislauf zurückgeführt wird.

2. Verfahren nach Anspruch 1,
**dadurch gekennzeichnet, dass**
bei einem die Grundauslegung übersteigenden Wärmeeintrag in die Verdampfer (4) Dampf nach dem Austritt aus dem Verdampfer (4) über eine Dampfleitung (17) entnommen und für Heizzwecke im Wasser-Dampf-Kreislauf verwendet wird.

3. Verfahren nach Anspruch 2,
**dadurch gekennzeichnet, dass**
der nach dem Austritt aus dem Verdampfer (4) entnommene Dampf in einem Dampfumformventil (21) entspannt wird.

4. Verfahren nach Anspruch 2,
**dadurch gekennzeichnet, dass**
der entnommene und entspannte Dampf einem der mit Anzapfdampf beheizten Vorwärmer (11, 14) zugeführt wird.

5. Verfahren nach Anspruch 2,
**dadurch gekennzeichnet, dass**
der entnommene und entspannte Dampf dem Speisewasserbehälter/Entgaser (12) zugeführt wird.

6. Verfahren nach Anspruch 2,
**dadurch gekennzeichnet, dass**
der entnommene und entspannte Dampf einem externen Verbraucher (19) zugeführt wird.

7. Verfahren nach Anspruch 1,
**dadurch gekennzeichnet, dass**
bei einem die Grundauslegung unterschreitenden Wärmeeintrag in den Verdampfer (4) Wasser vor dem Eintritt in den durch Rauchgas beheizten Verdampfer (4) entnommen und hinter dem Verdampfer (4) in den Wasser-Dampf-Kreislauf eingespritzt wird.

8. Verfahren nach Anspruch 7,
**dadurch gekennzeichnet, dass**
das Wasser in den überhitzten Dampf eingespritzt wird.

9. Verfahren nach Anspruch 7,
**dadurch gekennzeichnet, dass**
den Überhitzerheizflächen ein Teilstrom des überhitzten Dampfes entnommen, durch das Wasser gekühlt und in die Überhitzerheizflächen zurückgeführt wird.

10. Vorrichtung zur Durchführung eines Verfahren nach einem der Ansprüche 1 oder 2,
**dadurch gekennzeichnet, dass**
in Strömungsrichtung des Wasser-Dampf-Kreislaufes hinter dem Verdampfer (4) eine Dampfleitung (17) abgezweigt ist, in der ein Dampfumformventil (21) angeordnet ist, und dass stromabwärts des Dampfumformventils (21) von der Dampfleitung (17) Dampfzweigleitungen (18) abgezweigt und zu den mit Anzapfdampf beheizten Wärmetauschern des Wasser-Dampf-Kreislaufs geführt sind.

11. Vorrichtung zur Durchführung eines Verfahren nach einem der Ansprüche 1 oder 7,
**dadurch gekennzeichnet, dass**
parallel zu dem Überhitzer (5) eine Umgehungsleitung (22) vorgesehen ist, in der ein Dampfumformventil (23) mit Wassereinspritzung angeordnet ist, und dass von der Speisewasserleitung (15) vor deren Eintritt in den Vorwärmer (3) eine Speisewasserzweigleitung (24) abgezweigt ist, die mit der Wassereinspritzung des Dampfumformventils (23) verbunden ist.

12. Vorrichtung nach Anspruch 11,
**dadurch gekennzeichnet, dass**
nach dem Vorwärmer (3) eine Speisewasserzweigleitung (26) abgezweigt und an die Speisewasserzweigleitung (24) angeschlossen ist, die mit der Wassereinspitzung des Dampfumformventils (23) verbunden ist.
